# EUROPEAN PATENT APPLICATION

(11) **EP 4 095 732 A1**
(43) Date of publication of application: **30.11.2022**
(21) Application number: 22172697.9
(22) Date of filing: 11.05.2022
(51) Int. Cl.: G06F 30/10, G06F 111/04

(54) **SIMULATION MODEL GENERATION DEVICE, SIMULATION MODEL GENERATING METHOD, AND PROGRAM**

(30) Priority: 28.05.2021 JP 2021089867
(71) Applicant: Hitachi, Ltd., Tokyo 100-8280 (JP)
(72) Inventor: NAGAI, Yutaka, Tokyo, 100-8280 (JP); OHTOSHI, Sanato, Tokyo, 100-8280 (JP); UTSUGI, Kei, Tokyo, 100-8280 (JP)
(74) Representative: Strehl Schübel-Hopf & Partner

(57) **Abstract**

An object of the invention is to efficiently and automatically generate a simulation model used for verification from 3D CAD information. In order to solve the above problem, the invention provides a simulation model generation device configured to identify a connection relation between part elements constituting the device. The simulation model generation device includes: a contact surface number determination unit (1804) configured to determine the number of contact surfaces between the part elements using structural model data in the device; a shared rotation axis determination unit (1803) configured to determine, using the structural model data, presence or absence of a shared rotation axis between the part elements; and a connection relation identification unit (1805) configured to identify a connection relation between the part elements indicating any one of non-contact, fixation, slide, and rotation according to the number of the contact surfaces and the presence or absence of a shared rotation axis.

## Description

### BACKGROUND OF THE INVENTION

### 1. Field of the Invention

The present invention relates to a technique for identifying connection relations between part elements constituting a device that is indicated by structural model data of three-dimensional CAD used for design or the like. In particular, the invention relates to a technique for generating a simulation model using the identified connection relations.

### 2. Description of the Related Art

JP-A-2019-016180 has been proposed as a technique for grasping connection relations between part elements in a device. In JP-A-2019-016180, an object is to "check a fixed state between parts that are in contact with each other".

In order to achieve this object, JP-A-2019-016180 discloses that "among a plurality of parts constituting a product represented by three-dimensional CAD, one of the parts that are in contact with each other is set as a contacted part, and the other is set as a contact part. A contacted surface in the contacted part with which the contact part is in contact is identified. A contact part identification unit 14 identifies a contact part that is in contact with the contacted surface. A fixed state determination unit 15 moves the contact part identified by the contact part identification unit in a plurality of directions along the contacted surface and in a direction orthogonal to the contacted surface, and determines a fixed state of the contact part with respect to the contacted part based on whether the contact part is in contact with a portion other than the contact part. A display control unit 16 executes control such that an image of the product is displayed on a display unit in a display mode according to the fixed state determined by the fixed state determination unit".

Here, for design, verification is executed by simulation or the like. The design includes devices related to distribution and manufacturing, a system implemented by a combination of the devices, and a process using the devices and the system. In such verification, it is required to execute detailed verification at an earlier stage before trial production from the viewpoint of shortening a manufacturing period of the design. However, when a simulation model is manually constructed, it takes more time.

Therefore, for such verification, it is conceivable to grasp the connection relations of the part elements using the technique described in JP-A-2019-016180. Here, JP-A-2019-016180 discloses that a fixed state of a designated part is automatically extracted by detecting a part that is in contact when the designated part is moved in a predetermined direction.

However, in JP-A-2019-016180, only the fixed state between the part elements can be grasped, and it is difficult to execute verification more practically.

### SUMMARY OF THE INVENTION

An object of the invention is to identify connection relations between part elements in more detail and enable verification of a device or the like.

The above problem is solved by inventions described in the claims as an example.

According to the invention, the connection relations between the part elements in the device can be identified in more detail, and the verification of the device or the like can be executed accurately.

### BRIEF DESCRIPTION OF THE DRAWINGS

FIG. 1 is a flowchart showing processing according to an embodiment of the invention;
FIG. 2 is a diagram showing a specific example showing details of step S102 according to the embodiment of the invention;
FIGS. 3A, 3B, 3C, and 3D are diagrams showing a specific example of steps S105, S106, and S108 according to the embodiment of the invention;
FIG. 4 is a diagram showing a specific example of determination of presence or absence of a contact surface according to the embodiment of the invention;
FIG. 5 is a diagram showing a 3D CAD model included in 3D CAD information of a component 1 according to the embodiment of the invention;
FIGS. 6A, 6B, 6C, 6D, 6E, and 6F are diagrams showing processing for determining the number of contact surfaces between part elements in the component 1 according to the embodiment of the invention;
FIG. 7 is a table of the number of the contact surfaces showing results of determination of the contact surfaces of the component 1 according to the embodiment of the invention;
FIG. 8 is a connection relation table showing contact relations of the component 1 according to the embodiment of the invention;
FIG. 9 is a tree diagram of the component 1 according to the embodiment of the invention;
FIG. 10 is a diagram showing a 3D CAD model included in 3D CAD information of a component 2 according to the embodiment of the invention;
FIGS. 11A, 11B, 11C, and 11D are diagrams showing processing for determining the number of contact surfaces between part elements in the component 2 according to the embodiment of the invention;
FIG. 12 is a table of the number of the contact surfaces showing results of determination of the contact surfaces of the component 2 according to the embodiment of the invention;
FIG. 13 is a connection relation table showing contact relations of the component 2 according to the embodiment of the invention;
FIG. 14 is a tree diagram of the component 2 according to the embodiment of the invention;
FIG. 15 is a diagram showing a concept of a depth-first search method according to the embodiment of the invention;
FIG. 16 is a diagram showing an example in which the depth-first search method is applied to the tree diagram in FIG. 14 according to the embodiment of the invention;
FIG. 17 is a flowchart showing a processing flow relating to a user interface according to the embodiment of the invention;
FIG. 18 is a functional block diagram of a simulation model generation device according to the embodiment of the invention; and
FIG. 19 is a system configuration diagram according to the embodiment of the invention.

### DESCRIPTION OF THE PREFERRED EMBODIMENTS

Hereinafter, embodiments of the invention will be described. In the present embodiment, descriptions will be given using an example in which a simulation model is generated by identifying, as structure model data, connection relations using 3D CAD information for design.

### Configuration

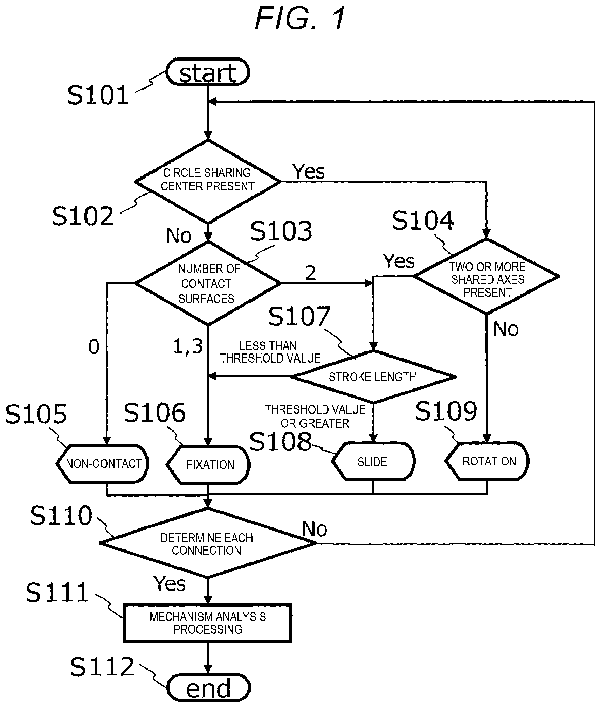

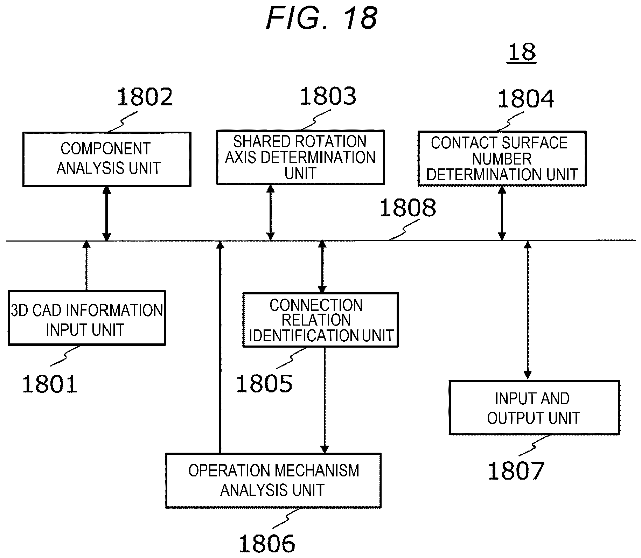

First, a configuration according to the present embodiment will be described. FIG. 18 is a functional block diagram of a simulation model generation device 18 according to the present embodiment. In FIG. 18, the simulation model generation device 18 includes a 3D CAD information input unit 1801, a component analysis unit 1802, a shared rotation axis determination unit 1803, a contact surface number determination unit 1804, a connection relation identification unit 1805, an operation mechanism analysis unit 1806, an input and output unit 1807, and a bus 1808 that connects these units. Hereinafter, functions of the configurations will be described, and details thereof will be described later with reference to the flowchart shown in FIG. 1. In the present embodiment, the simulation model generation device 18 is described as an example, but generation of a simulation model may be omitted and the simulation model generation device 18 may be configured as a connection relation characteristic device.

First, the 3D CAD information input unit 1801 receives an input of the 3D CAD information. The 3D CAD information is design information of a device (component) to be verified, and is information on a shape and a size of the component and a provision position of a part constituting the component.

It is assumed that the 3D CAD information is stored in a storage unit (not shown) of the simulation model generation device 18 or a storage unit of another device. Thus, the 3D CAD information input unit 1801 has an interface function.

Next, the component analysis unit 1802 analyzes the input 3D CAD information and decomposes the 3D CAD information into part elements constituting the component. The part elements include a module that is a combination of a component itself, part elements, and parts, and can also be expressed as components.

Next, the shared rotation axis determination unit 1803 determines presence or absence of a shared rotation axis between the part elements analyzed by the component analysis unit 1802. More specifically, the shared rotation axis determination unit 1803 executes processing of determining presence or absence of a circle sharing a center between the part elements. This processing is step S102 in FIG. 1, which will be described later. Further, it is desirable that the shared rotation axis determination unit 1803 determines whether two or more shared axes are present (step S104 in FIG. 1).

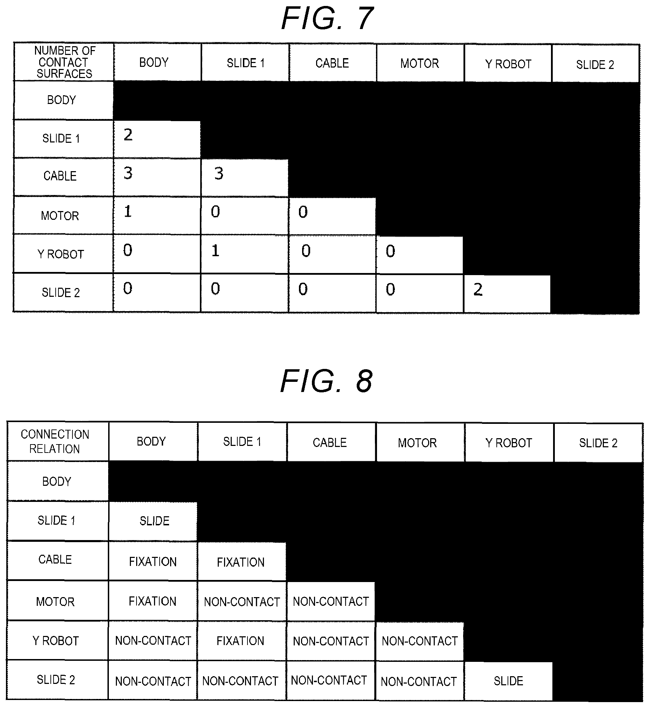

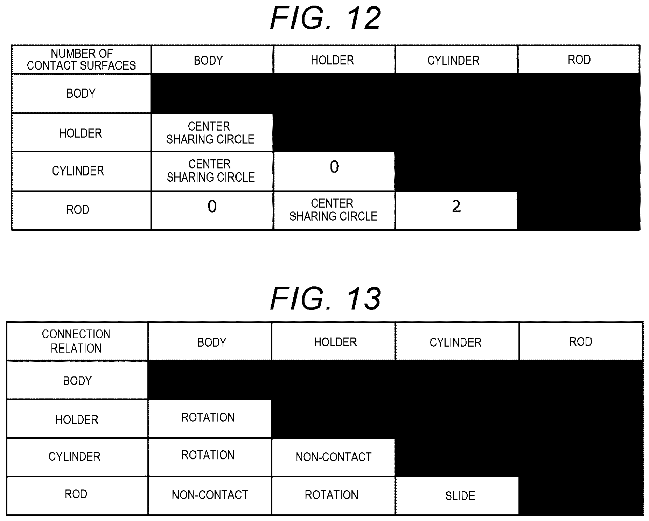

Next, the contact surface number determination unit 1804 determines the number of contact surfaces between the part elements. That is, the contact surface number determination unit 1804 counts the number of the contact surfaces. More specifically, step S103 in FIG. 1, which will be described later, is executed. As a result, tables of the number of the contact surfaces shown in FIGS. 7 and 12 are generated. These will be described later.

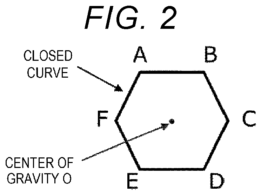

Next, the connection relation identification unit 1805 identifies the connection relations between the part elements based on the information on the number of the contact surfaces between the part elements and presence or absence of a common rotation circle. The connection relations include "non-contact", "fixation", "slide", and "rotation", and the connection relation identification unit 1805 identifies which of "non-contact", "fixation", "slide", and "rotation" the connection relation is. Specifically, processing in steps S105 to S109 in FIG. 2 is executed. "Non-contact" indicates a state in which part elements are not in contact with nor connected to each other. "Fixation" indicates that the part elements are in contact with or connected to each other, and operations of the parts are fixed in the contact or connection. Here, the operation being fixed may be an operation within a certain range. "Slide" indicates that the part elements are in contact with or connected to each other and operate in a manner of being shifted (have a stroke). In this case, slide may be defined when an amount of shift is equal to or greater than a certain value. Further, "rotation" indicates that the part elements are in contact with or connected to each other, and the parts operate in a manner of being rotated in the contact or connection.

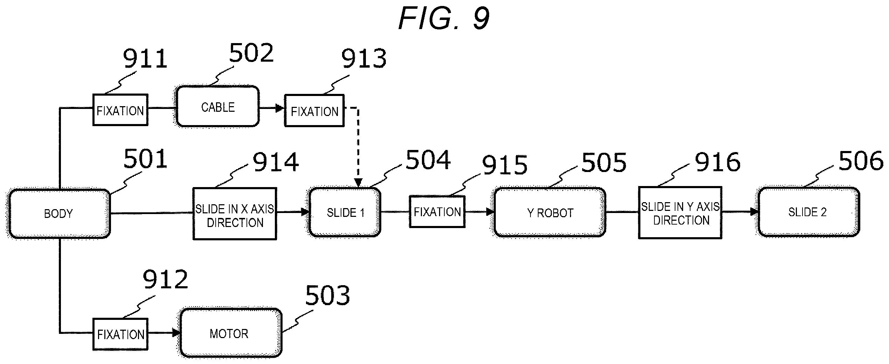

Next, the operation mechanism analysis unit 1806 analyzes an operation mechanism based on the connection relations. That is, what kind of operation a target component performs is identified. This identification also includes identification of an operation mechanism such as a link mechanism or a crank mechanism. The processing executes step Sill in FIG. 1. Specifically, the operation mechanism analysis unit 1806 executes processing of generating tree diagrams shown in FIGS. 9, 14, 15, and 16 and deriving an operation mechanism from the tree diagrams. As a result, the operation mechanism analysis unit 1806 generates a simulation model. Further, it is desirable that the operation mechanism analysis unit 1806 executes various verifications (simulations) using an analysis result of the above operation mechanism.

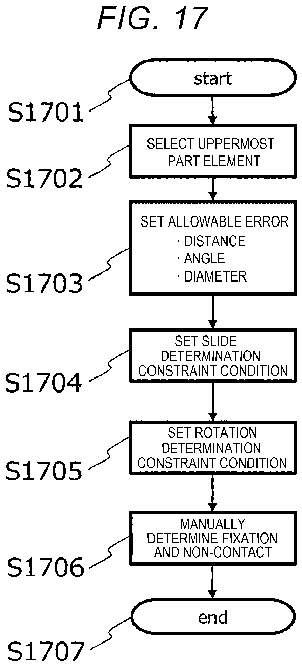

Next, the input and output unit 1807 presents information to the user and inputs information from the user. Therefore, the input and output unit 1807 may be implemented by a display device such as a display and an input device such as a keyboard or a mouse, or may be implemented by a configuration such as a touch panel. In addition, the input and output unit 1807 may be provided in the simulation model generation device 18, or may be implemented as another independent terminal device. The input and output unit 1807 executes a user interface shown in a flowchart in FIG. 17.

The simulation model generation device 18 can be implemented by a so-called computer. Therefore, the component analysis unit 1802 to the operation mechanism analysis unit 1806 may be implemented by computer programs, or may be implemented by dedicated hardware, a field programmable gate array (FPGA), or the like. The computer programs are stored in a storage medium or distributed to the simulation model generation device 18 through a network.

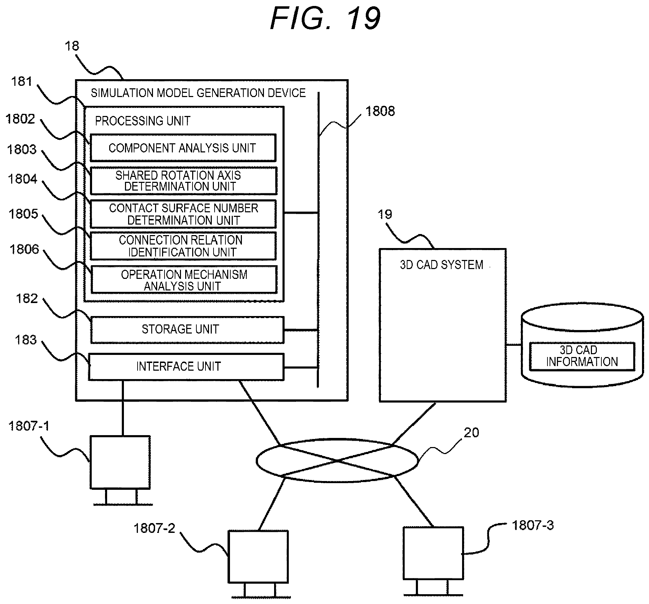

Next, in the present embodiment, a configuration example in which the simulation model generation device 18 is implemented by a server such as a so-called cloud is shown in FIG. 19. FIG. 19 is a system configuration diagram according to the present embodiment. In FIG. 19, the simulation model generation device 18 is connected to a 3D CAD system and terminal devices 1807-1 to 1807-3. Among the 3D CAD system and the terminal devices 1807-1 to 1807-3, the 3D CAD system and the terminal devices 1807-2 and 1807-3 are connected to the simulation model generation device 18 via a network 20.

Here, the simulation model generation device 18 is implemented by a computer, and includes a processing unit 181, a storage unit 182, and an interface unit 183, which are connected to one another via the bus 1808.

Here, the processing unit 181 is implemented by a processor such as a so-called CPU. Further, the processing unit 181 executes processing by the component analysis unit 1802 to the operation mechanism analysis unit 1806. Therefore, the processing unit 181 may include the component analysis unit 1802 to the operation mechanism analysis unit 1806, or may execute processing according to the corresponding computer programs stored in the storage unit 182.

The storage unit 182 stores the information and the computer programs. Therefore, the storage unit 182 can be implemented by a memory, an HDD, an SDD, or the like. In the present embodiment, the 3D CAD information is held in the 3D CAD system 19, and the 3D CAD information may be held in the storage unit 182.

The interface unit 183 executes a function of connecting to the network 20 and the terminal device 1807-1, and corresponds to the 3D CAD information input unit 1801 in FIG. 18.

Here, the terminal devices 1807-1 to 1807-3 correspond to the input and output unit 1807 in FIG. 18. Among the terminal devices 1807-1 to 1807-3, the terminal device 1807-1 is provided in the same site as the simulation model generation device 18, and is connected to the simulation model generation device 18 via an intranet. The terminal devices 1807-2 and 1807-3 are provided at a remote location from the simulation model generation device 18, and are connected to the simulation model generation device 18 via a wide area network such as the Internet as the network 20. The terminal devices 1807-1 to 1807-3 are functionally the same, and can be implemented by an information processing device such as a smartphone, a tablet, or a PC. Therefore, the terminal devices 1807-1 to 1807-3 execute various types of processing according to a computer program such as a so-called application.

Further, the 3D CAD system 19 designs components according to an operation on the terminal devices 1807-1 to 1807-3 or an input device provided in the 3D CAD system 19. The 3D CAD system 19 stores the 3D CAD information that is design information created as a result of the design. The 3D CAD information can be acquired by the simulation model generation device 18 via the interface unit 183. The above concludes the description of the configuration according to the present embodiment.

### Processing Flow

Next, a processing flow according to the present embodiment will be described. FIG. 1 is a flowchart showing processing according to the embodiment. Hereinafter, with reference to FIG. 1, the processing flow according to the present embodiment will be described using configurations in FIG. 18 as a processing subject.

First, in step S101, the present processing flow is started. Therefore, it is desirable that, as a condition, the input and output unit 1807 receives an instruction to start processing from the user. At this time, the 3D CAD information input unit 1801 acquires the 3D CAD information of the target component. Here, it is desirable that the input and output unit 1807 receives an instruction to identify the target component from the user, and the 3D CAD information input unit 1801 acquires the 3D CAD information corresponding to the instruction.

As preparation for the following processing, the component analysis unit 1802 may decompose the component indicated by the acquired 3D CAD information into part elements. The 3D CAD system 19 may store, as the 3D CAD information, the information decomposed into the part elements.

Next, in step S102, the shared rotation axis determination unit 1803 determines whether a circle sharing the center is present between the part elements constituting the component. Therefore, the shared rotation axis determination unit 1803 extracts the part elements and creates a combination thereof. Then, the shared rotation axis determination unit 1803 determines presence or absence of each combination of the part elements. This step and steps S103 to S109 are executed for each part element. When it is determined in the determination processing that no circle sharing the center is present (No), the processing proceeds to step S103. In addition, when it is determined that a circle is present (Yes), the processing proceeds to step S104.

Here, details of step S102 will be described using a specific example shown in FIG. 2. In FIG. 2, the shared rotation axis determination unit 1803 determines that the center of gravity O of a closed curve passing through points of A, B, C, D, E, and F related to the part elements is the center of the circle. Further, the shared rotation axis determination unit 1803 determines whether a point similarly determined to be the center among points on a direction axis perpendicular to a plane constituting the closed curve A, B, C, D, E, and F overlaps the point O determined to be the center. As a result, in the case of overlapping, the shared rotation axis determination unit 1803 determines that a circle sharing the center is present. When points are present within a predetermined range, the shared rotation axis determination unit 1803 determines that an overlapping point is present. As described above, according to the present processing, by obtaining the center of the circle based on the center of gravity of the closed curve and determining whether the center of the circle overlaps in the vertical axis direction of the plane constituting the closed curve, it is possible to automatically determine the presence or absence of the circle sharing the center based on information on a 3D polygon.

Then, in step S103, the contact surface number determination unit 1804 executes processing of determining the number of the contact surfaces between the part elements constituting the component. That is, the contact surface number determination unit 1804 counts the number of the contact surfaces. As a result, when the number of the contact surfaces is 0, the processing proceeds to step S105. When the number of the contact surfaces is 1 or 3, the processing proceeds to step S106. Further, when the number of the contact surfaces is 2, the processing proceeds to step S107. The contact surface number determination unit 1804 may determine that the number of the contact surfaces is "0", an "odd number", or an "even number". In this case, when the number of the contact surfaces is "0", the processing proceeds to step S105, when the number of the contact surfaces is an "odd number", the processing proceeds to step S106, and when the number of the contact surfaces is an "even number", the processing proceeds to S107.

In step S104, the shared rotation axis determination unit 1803 determines, that is, counts the number of shared axes of the circle to be shared. As a result, when it is determined that the number of the shared axes is less than two, that is, one (No), the processing proceeds to step S109. When it is determined that the number of the shared axes is two or more (Yes), the processing proceeds to step S107.

Further, in step S107, the connection relation identification unit 1805 determines whether a slide movable range is equal to or greater than a predetermined threshold value. This is because, when the number of the contact surfaces is 2, slide is possible in a direction in which no contact surface is present, and when two or more shared axes are present, rotation is not possible and slide is possible in a direction corresponding to the rotation axis. Here, even when the slide is microscopically performed, if an amount of the slide is small, it can be determined that the connection relation is fixation, and thus step S107 is executed.

Based on results of the above processing, processing of identifying the connection relations is executed in steps S105 to S109. Steps S104 and S107 may be omitted, and the processing of identifying the connection relations in steps S105 to S109 may be executed based on the "presence or absence of the shared rotation axis (step S102)" and the "number of contact surfaces (step S103)". In this case, when a circle to be shared is present in step S102, the processing proceeds to step S109. When it is determined in step S103 that the number of the contact surfaces is 2, the processing proceeds to step S108.

Next, the connection relation identification unit 1805 determines in step S105 that the connection relations between the target part elements are "non-contact". In the case of 0, it is determined that the connection relations are non-contact. The determination is executed by the connection relation identification unit 1805 based on the fact that no circle sharing the center is present and the number of the contact surfaces is 0.

The connection relation identification unit 1805 determines in step S106 that the connection relation is fixation because it is determined that the slide movable range is less than the predetermined threshold value or the number of the contact surfaces is 1 to 3.

The connection relation identification unit 1805 determines in step S108 that the connection relation is slide because it is determined that the slide movable range is equal to or greater than the predetermined threshold value.

Further, the connection relation identification unit 1805 determines in step S109 that the connection relation is rotation because it is determined that one shared rotation axis is present.

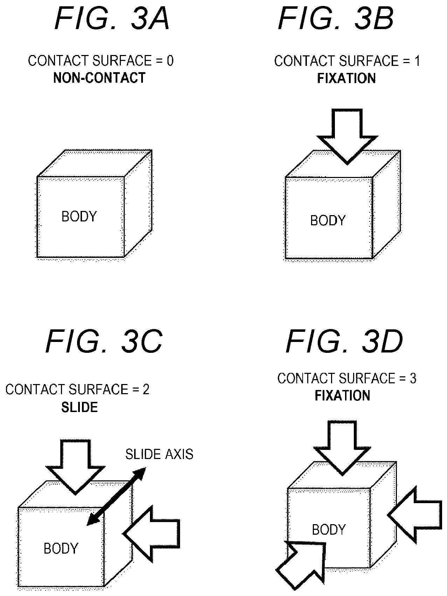

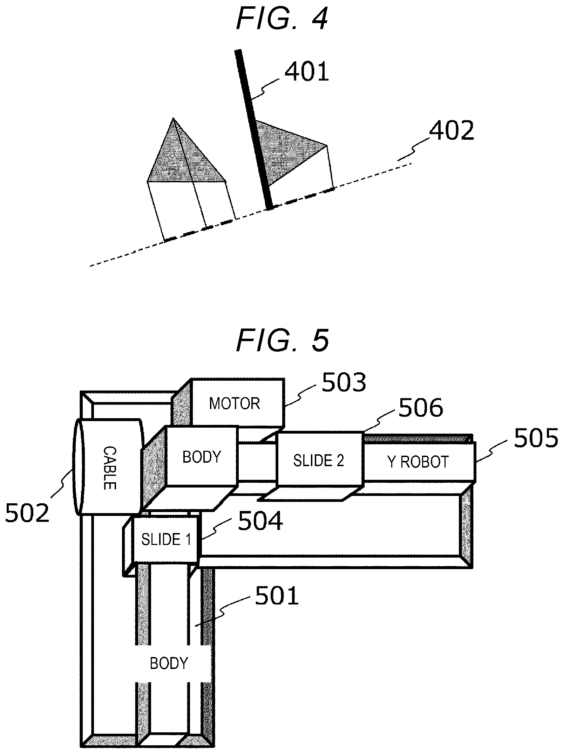

Here, details of the determination of the connection relation will be described with reference to FIGS. 3A, 3B, 3C, 3D, and 4. First, a specific example of steps S105, S106, and S108 will be described with reference to FIGS. 3A, 3B, 3C, and 3D.

First, as shown in FIG. 3A, when the number of surfaces in contact with a part element Body is 0, the connection relation identification unit 1805 determines that the connection relation is non-contact. In addition, when the contact surface between the part element Body and the other component that are shown in FIG. 3B is only one surface in a direction of the arrow, the connection relation identification unit 1805 determines that the part element Body and the other component are fixed because an operating axis cannot be constructed by only one surface.

As shown in FIG. 3C, when contact surfaces are present on a z axis and an x axis, the connection relation identification unit 1805 determines that a slide relation is present between the target parts because the target parts can slide in a y axis direction with the two contact surfaces as supports. Further, as shown in FIG. 3D, when it is determined that the target part element and the other part are in contact with each other on surfaces in three different directions of contact surfaces x, y, and z, the connection relation identification unit 1805 determines that the two parts cannot move and have a fixation relation.

As described above, according to the present embodiment, it is possible to automatically obtain the connection relations between the part elements constituting the component based on the number of the contact surfaces of the part elements of the 3D polygon.

Here, in the determination of the connection relation, the number of contact surfaces is determined (see FIGS. 3A, 3B, 3C, and 3D and step S103). In such determination of the number of the contact surfaces, it is necessary to determine whether a contact is present between the part elements, that is, whether a contact surface is present. A specific example of the determination of the presence or absence of the contact surface will be described with reference to FIG. 4.

The contact surface number determination unit 1804 executes collision determination between triangular polygons indicating the part elements present in the same plane in FIG. 4, and sets, as the contact surface, a surface on which the collision occurs. Here, the contact surface number determination unit 1804 determines sides of the triangle as a candidate (thick line: 401) for a separation axis, and projects the triangle onto a line segment (broken line: 402) perpendicular to the separation axis. As a result, when projected portions (thick and broken lines) overlap, the contact surface number determination unit 1804 determines that the collision occurs, that is, a contact surface is present (in the case in this drawing, it is determined that no overlapping is present and no collision occurs). The contact surface number determination unit 1804 executes the above processing for each side. Thus, the presence or absence of the contact surface is determined. As described above, according to the present embodiment, the presence or absence of the contact surface between the 3D polygons can be determined.

Next, returning to FIG. 1, the description of the processing flow according to the present embodiment will be continued. Next, the connection relation identification unit 1805 determines in step S110 whether the determination of the connection relation is completed for each combination of the part elements that is created in step S102. As a result, when it is determined that the determination of each connection, that is, the connection relation between the part elements is completed (Yes), the processing proceeds to step Sill. When it is determined that the determination is not completed (No), the processing proceeds to step S102, and the processing is executed between the other part elements.

Next, in step Sill, the operation mechanism analysis unit 1806 analyzes the operation mechanism. As a result, the operation mechanism analysis unit 1806 identifies an operation mechanism including the part elements constituting the component. Further, the operation mechanism analysis unit 1806 outputs the identified operation mechanism via the input and output unit 1807.

As described above, the simulation model is generated. Then, in step S112, the present processing flow is ended.

As described above, according to the present embodiment, the processing of determining the number of the contact surfaces between the part elements and the number of circles sharing the center is automatically executed on a component including a plurality of part elements. Accordingly, it is possible to automatically extract operation mechanism information necessary for simulation from 3D CAD information, that is, design information of the component including a plurality of part elements. Therefore, it is possible to automatically generate the simulation model based on the 3D CAD information. The 3D CAD information is used in the present embodiment. Alternatively, device information including other design information and shapes may be used.

In the present embodiment, the processing is ended in step S112. Alternatively, the operation mechanism analysis unit 1806 may execute simulation (verification) according to the designation of the user from the input and output unit 1807. At this time, the operation mechanism analysis unit 1806 executes simulation using the connection relation and the operation mechanism.

As described above, the description of the processing flow according to the present embodiment is completed. Next, examples according to the present embodiment will be described.

### First Example

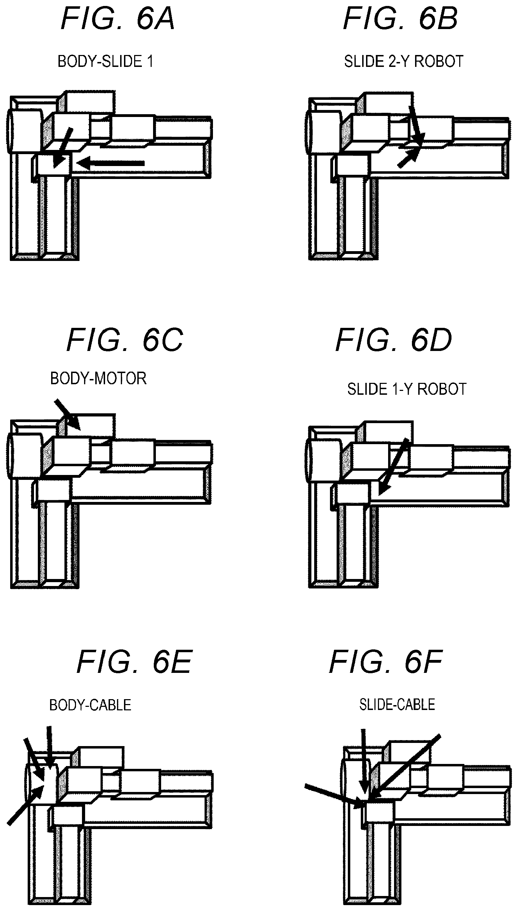

Generation of the simulation model according to the present embodiment described above will be described using examples. First, as a first example, a component 1 will be described. FIG. 5 shows a 3D CAD model included in 3D CAD information of the component 1 for which the simulation model according to the present embodiment is to be generated. In FIG. 5, the component 1 includes a body (501), a cable (502), a motor (503), a slide 1 (504), a Y robot (505), and a slide 2 (506), which are part elements. The component 1 has connection relations as shown in FIG. 5. Hereinafter, the processing for determining the number of contact surfaces between the part elements of the component 1 will be described with reference to FIGS. 6A, 6B, 6C, 6D, 6E, and 6F.

First, FIGS. 6A to 6E are diagrams showing contact surfaces in a case in which the number of the contact surfaces in the component 1 is 1 or more. FIG. 6A shows contact surfaces between the body (501) and the slide 1 (504), and shows that the body (501) and the slide 1 (504) are in contact with each other on two surfaces indicated by arrows. FIG. 6B shows contact surfaces between the slide 2 (506) and the Y robot (505), and shows that the slide 2 (506) and the Y robot (505) are in contact with each other on two surfaces indicated by arrows.

FIG. 6C shows a contact surface between the body (501) and the motor (503), and shows that the body (501) and the motor (503) are in contact with each other on one surface indicated by an arrow. FIG. 6D shows a contact surface between the slide 1 (504) and the Y robot (505), and shows that the slide 1 (504) and the Y robot (505) are in contact with each other on one surface indicated by an arrow.

FIG. 6E shows contact surfaces between the body (501) and the cable (502), and shows that the body (501) and the cable (502) are in contact with each other on three surfaces indicated by arrows. Further, FIG. 6F shows that the slide 1 (504) and the cable (502) are in contact with each other on three surfaces indicated by arrows, although contact portions are places that are difficult to be seen in this drawing. Thus, the contact surface number determination unit 1804 can determine the contact surface of the component 1.

Next, FIG. 7 is a table of the number of the contact surfaces showing results of determining the contact surface of the component 1. In the table of the number of the contact surfaces, a vertical axis and a horizontal axis indicate the part elements of the component 1, and the number of the contact surfaces between the part elements is recorded in intersecting areas. First, the number of the contact surfaces between the slide 1 and the body is 2 as shown in FIG. 6A. In addition, the number of the contact surfaces between the cable and the body is 3 as shown in FIG. 6E. The number of the contact surfaces between the cable and the slide 1 is 3 as shown in FIG. 6F. The number of the contact surfaces between the motor and the body is 1 as shown in FIG. 6C. Since the motor and the slide 1 are separated from each other and the motor and the cable are separated from each other, the number of the contact surfaces is 0. The Y robot and the body are also separated from each other, and the number of the contact surfaces is 0. The number of the contact surfaces between the Y robot and the slide 1 is 1 as shown in FIG. 6D. Since the Y robot is not in contact with the cable and the Y robot is not in contact with the motor, the number of the contact surfaces is 0. The slide 2 is not in contact with the body, the slide 2 is not in contact with the slide 1, the slide 2 is not in contact with the cable, the slide 2 is not in contact with the motor, and the number of the contact surfaces is 0. The number of the contact surfaces between the slide 2 and the Y robot is 2 as shown in FIG. 6E. As described above, the contact surface number determination unit 1804 creates the table of the number of the contact surfaces shown in FIG. 7 as a result of step S103, and stores the table in the storage unit 182.

Next, a connection relation table showing the connection relations identified by the connection relation identification unit 1805 will be described with reference to FIG. 8. FIG. 8 shows the connection relations between the part elements of the component 1 using the table of the number of the contact surfaces in FIG. 7. In FIG. 8, in the connection relation table, a vertical axis and a horizontal axis indicate the part elements of the component 1, and the connection relations between the corresponding part elements are recorded in intersecting areas. Hereinafter, processing contents in the connection relation identification unit 1805 and contents of the connection relation table which is the result thereof will be described.

First, since the number of the contact surfaces between the slide 1 (504) and the body (501) is 2 and a stroke length is not particularly small, the connection relation is slide. Here, "short" means that the stroke length is smaller than a preset threshold value.

Since the number of the contact surfaces between the cable (502) and the body (501) is 3, the connection relation is fixation. Since the number of the contact surfaces between the cable (502) and the slide 1 (504) is 3, the connection relation is fixation. Since the number of the contact surfaces between the motor (503) and the body (501) is 1, the connection relation is fixation. Since the number of the contact surfaces between the motor (503) and the slide 1 (504) and between the motor (503) and the cable (502) is 0, the connection relation is non-contact. Since the number of the contact surfaces between the Y robot (505) and the body (501) is 0, the connection relation is non-contact. Since the number of the contact surfaces between the Y robot (505) and the slide 1 (504) is 1, the connection relation is fixation. Since the number of the contact surfaces between the Y robot (505) and the cable (502) and between the Y robot (505) and the motor (503) is 0, the connection relation is non-contact. Since the number of the contact surfaces between the slide 2 (506) and the body (501), between the slide 2 (506) and the slide 1 (504), between the slide 2 (506) and the cable (502), and between the slide 2 (506) and the motor (503) is 0, the connection relation is non-contact. Since the number of the contact surfaces between the slide 2 (506) and the Y robot (505) is 2 and the stroke length is not particularly small, the connection relation is slide.

As described above, the connection relation identification unit 1805 identifies the connection relations between the part elements and stores the connection relations in the connection relation table in the storage unit 182.

As described above, in the present embodiment, for the component 1 shown in FIG. 5, the number of the contact surfaces between the part elements is obtained as shown in FIGS. 6A, 6B, 6C, 6D, 6E, 6F, and 7, and the connection relation can be identified based on the number of the contact surfaces between the part elements as shown in FIG. 8. That is, the processing flow in the flowchart shown in FIG. 1 can be applied to the component 1 which is an example. In this example, it is assumed that it is determined that no center sharing circle is present (No in step S102).

Next, the processing executed by the operation mechanism analysis unit 1806 for the component 1 will be described. FIG. 9 shows a tree diagram generated by the operation mechanism analysis unit 1806. That is, this tree diagram is a tree diagram created, for the component 1, by the operation mechanism analysis unit 1806 based on the connection relation table shown in FIG. 8. Hereinafter, the creation of the tree diagram and the structure thereof will be described.

First, the operation mechanism analysis unit 1806 extracts, among the part elements of the component 1, the body (501) as the uppermost part of the tree. Therefore, it is desirable to receive designation of the uppermost part element from the user via the input and output unit 1807. Alternatively, the operation mechanism analysis unit 1806 extracts the uppermost part element according to a predetermined rule.

Next, the operation mechanism analysis unit 1806 extracts part elements connected to the body (501) from the connection relation table. That is, a part element having a connection relation other than non-contact with the body (501) is extracted. In this example, the operation mechanism analysis unit 1806 extracts the cable (502), the motor (503), and the slide 1 (504). Further, the operation mechanism analysis unit 1806 identifies the connection relations between the extracted part elements and the uppermost part element based on the connection relation table. That is, the cable (502) is connected to the body (501) by fixing (911). The motor (503) is connected to the body (501) by fixing (912). In addition, the slide 1 (504) is connected to the body (501) by sliding in the X axis direction (914) (the axial direction is shown in FIGS. 6A, 6B, 6C, 6D, 6E, and 6F).

Next, the operation mechanism analysis unit 1806 extracts, from the connection relation table, the extracted part elements and part elements connected to parts other than the uppermost part. As described above, the part elements in the connection relations other than non-contact are also extracted here. Accordingly, the operation mechanism analysis unit 1806 identifies the connection relation with a second layer of the tree diagram. Specifically, the operation mechanism analysis unit 1806 extracts the slide 1 (504) connected to the cable (502). Then, the operation mechanism analysis unit 1806 identifies that the connection relation between the cable (502) and the slide 1 (504) is fixation (913) based on the connection relation table.

The operation mechanism analysis unit 1806 identifies the slide 1 (504) as the third layer of the tree diagram. Further, among the part elements connected to the slide 1 (504), part configurations other than the body (501) and the cable (502) for which connection is identified are identified. Specifically, the Y robot (505) is identified. Then, the operation mechanism analysis unit 1806 identifies the connection relation between the slide 1 (504) and the Y robot (505) as fixation (915) based on the connection relation table.

Hereinafter, in the same manner, as the fourth layer, the slide 2 (506) is identified as a part element having a connection relation with the Y robot (505), and the connection relation thereof is also identified as slide in the Y axis direction (916) (the axial direction is shown in FIGS. 6A, 6B, 6C, 6D, 6E, and 6F).

Further, the operation mechanism analysis unit 1806 determines that the slide 2 (506) is the lowermost layer based on the table of the number of the contact surfaces and the connection relation table. Thus, the operation mechanism analysis unit 1806 creates the tree diagram shown in FIG. 9. Accordingly, when the tree diagram created in this way is analyzed, a loop including body (501)-fixation (911)-cable (502)-fixation (913)-slide 1 (504)-slide in the X axis direction (914)-body (501) is generated.

Here, the operation mechanism analysis unit 1806 analyzes the loop shown in the tree diagram, and detects the following contradiction. The cable (502) is fixed to both of the body (501) and the slide 1 (954), but the relation between the body (501) and the slide 1 (504) is slide, which causes a contradiction.

Here, in order to solve this contradiction, it is necessary to change the slide in the X axis direction (914) to fixation, or to cut the fixation (913) or the fixation (911) and change the fixation (913) or the fixation (911) to non-contact. To cope with this, the following correspondences (1) to (3) can be achieved.

### (1) Automatic Correspondence by Operation Mechanism Analysis Unit 1806

When the tree diagram is created, regarding the slide (914) in the X axis direction, it is checked that in the processing of determining the stroke length in step S107, the stroke length is equal to or greater than a predetermined threshold value. Therefore, the operation mechanism analysis unit 1806 determines to cut the fixation (913) or the fixation (911). Then, the operation mechanism analysis unit 1806 gives priority to the upper side of the tree diagram between the fixation (913) and the fixation (911). That is, the operation mechanism analysis unit 1806 cuts the fixation (913) farther from the uppermost body (501). As a result, as shown in FIG. 9, a portion between the fixation (913) and the slide 1 (504) is indicated by a broken line.

In this correspondence, the operation mechanism analysis unit 1806 may identify the portion between the fixation (913) and the slide 1 (504) as a first candidate for cutting. Then, the operation mechanism analysis unit 1806 outputs these to the input and output unit 1807. Further, the operation mechanism analysis unit 1806 determines a cut portion according to permission from the user.

### (2) Selection by User

In addition to the first candidate in (1), the operation mechanism analysis unit 1806 identifies the fixation 911 and the slide in the X axis direction (914) as other candidates. Next, the operation mechanism analysis unit 1806 outputs these candidates to the input and output unit 1807. At this time, it is desirable that the candidates are output without being particularly distinguished from each other. Then, the operation mechanism analysis unit 1806 determines, as a cut portion, selection results received from the user via the input and output unit 1807.

### (3) User Instruction

The operation mechanism analysis unit 1806 outputs that a contradiction occurs in the input and output unit 1807. Next, the operation mechanism analysis unit 1806 receives an instruction of a cut portion from the user via the input and output unit 1807. Then, the operation mechanism analysis unit 1806 determines the instructed portion as a cut portion.

The above concludes the description of (1) to (3). As a result, the cable (502) and the motor (503) are fixed to the body (501) which is a mother body, and the slide 1 (54) is connected to the body (501) by sliding in the X axis direction. In addition, the Y robot (505) is connected to the slide 1 (504), and the slide 2 is connected to the Y robot (505) by sliding in the Y axis direction. The operation mechanism analysis unit 1806 executes operation analysis as described above, and generates a simulation model according to the result.

The first example has been described above in which the simulation model is generated for the component 1. The first example indicates that the operation analysis can be automatically executed on a component having a slide mechanism. In addition, even for the cable (502) whose shape can be changed, it is possible to correctly execute the operation analysis by tree analysis.

### Second Example

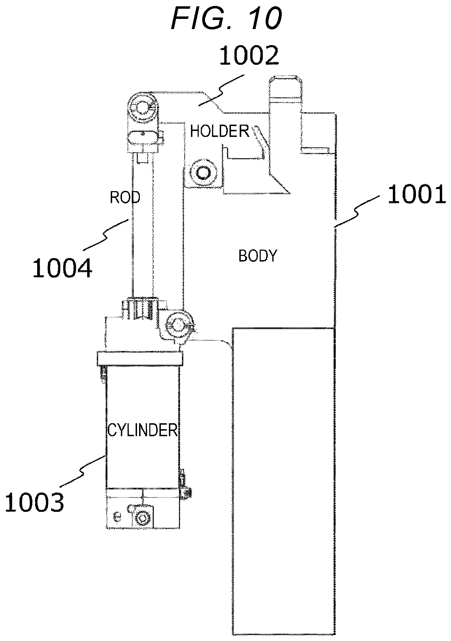

Next, generation of a simulation model for a component 2 will be described as a second example. FIG. 10 is a diagram showing a 3D CAD model included in 3D CAD information of the component 2. The component 2 includes part elements of a body 1001, a holder 1002, a cylinder 1003, and a rod 1004.

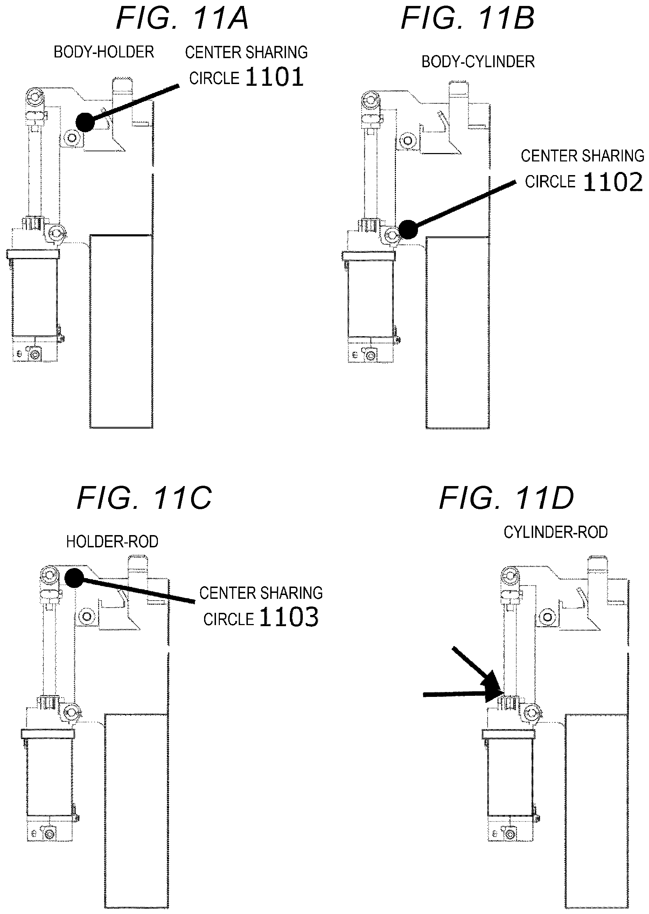

Processing for determining the number of contact surfaces between the part elements of the component shown in FIG. 10 will be described with reference to FIGS. 11A, 11B, 11C, and 11D. Hereinafter, the processing for determining the number of the contact surfaces between the part elements of the component 2 will be described with reference to FIGS. 11A, 11B, 11C, and 11D.

FIGS. 11A, 11B, and 11C show a case in which a circle sharing the center is present, and FIG. 11D shows a case in which 1 or more contact surfaces are present. First, FIG. 11A shows a center sharing circle 1101 between the body 1001 and the holder 1002. Here, the body 1001 and the holder 1002 indicate that a circle indicated by a circle arrow is set as a center sharing circle, and the body 1001 and the holder 1002 can rotate about a center of the center sharing circle.

FIG. 11B shows a center sharing circle (1102) between the body 1001 and the cylinder 1003. Here, the body 1001 and the cylinder 1003 indicate that a circle indicated by a circle arrow is a center sharing circle, and the body 1001 and the cylinder 1003 can rotate about the center of the center sharing circle.

FIG. 11C shows a center sharing circle (1103) between the holder 1002 and the rod 1004. Here, the holder 1002 and the rod 1004 indicate that a circle indicated by a circle arrow is a center sharing circle, and the holder 1002 and the rod 1004 can rotate about the center of the center sharing circle.

FIG. 11D shows contact surfaces between the cylinder 1003 and the rod 1004, and shows that the cylinder 1003 and the rod 1004 are in contact with each other on two surfaces indicated by arrows.

Next, FIG. 12 shows a table of the number of the contact surfaces showing results of determining the contact surface of the component 2 shown in FIGS. 11A, 11B, 11C, and 11D. The table of the number of the contact surfaces in FIG. 12 is a table showing results of the processing of determining the center sharing circles or the number of the contact surfaces between the part elements of the component 2 for combinations between the part elements. The table of the number of the contact surfaces is created by the operation mechanism analysis unit 1806 in the same manner as the component 1.

Here, in the table of the number of the contact surfaces, a center sharing circle is present between the body 1001 and the holder 1002 as shown in FIG. 11A. A center sharing circle is present between the cylinder 1003 and the body 1001 as shown in FIG. 11B. In addition, the cylinder 1003 and the holder 1002 are separated from each other, and the number of the contact surfaces is 0. The rod and the body are separated from each other, and the number of the contact surfaces is 0. A center sharing circle is present between the rod 1004 and the holder 1002 as shown in FIG. 11C. The number of the contact surfaces between the rod 1004 and the cylinder 1003 is 2 as shown in FIG. 11D. The contact surface number determination unit 1804 creates the table of the number of the contact surfaces as described above, and stores the table of the number of the contact surfaces in the storage unit 182.

Next, a table of connection relations indicating the connection relations identified by the connection relation identification unit 1805 for the component 2 will be described with reference to FIG. 13.

Since a center sharing circle is present between the body 1001 and the holder 1002, in FIG. 13, the connection relation identification unit 1805 identifies the connection relation thereof to rotation. In addition, since a center sharing circle is present between the cylinder 1003 and the body 1001, the connection relation identification unit 1805 identifies the connection relation thereof to rotation. Since the cylinder 1003 and the holder 1002 are separated from each other and the number of the contact surfaces is 0, the connection relation identification unit 1805 identifies the connection relation thereof to non-contact.

Since the number of the contact surfaces between the rod 1004 and the body 1001 is 0, the connection relation identification unit 1805 identifies the connection relation thereof to non-contact. Since a center sharing circle is present between the rod 1004 and the holder 1002, the connection relation thereof is rotation. In addition, since the number of the contact surfaces between the rod 1004 and the cylinder 1003 is 2, which does not correspond to, in particular, a case in which the stroke length is small, the connection relation identification unit 1805 identifies the connection relation thereof to slide.

Thus, the connection relation identification unit 1805 identifies the connection relations between the part elements as described above, and stores results in the connection relation table in the storage unit 182.

As described above, in this example, for the component 2, the presence or absence of a center sharing circle between the part elements and the number of the contact surfaces are obtained as shown in FIGS. 12 and 13, and the connection relation can be determined based on the presence or absence of a center sharing circle between all the part elements or the number of the contact surfaces as shown in FIG. 10.

Next, the processing executed by the operation mechanism analysis unit 1806 for the component 2 will be described.

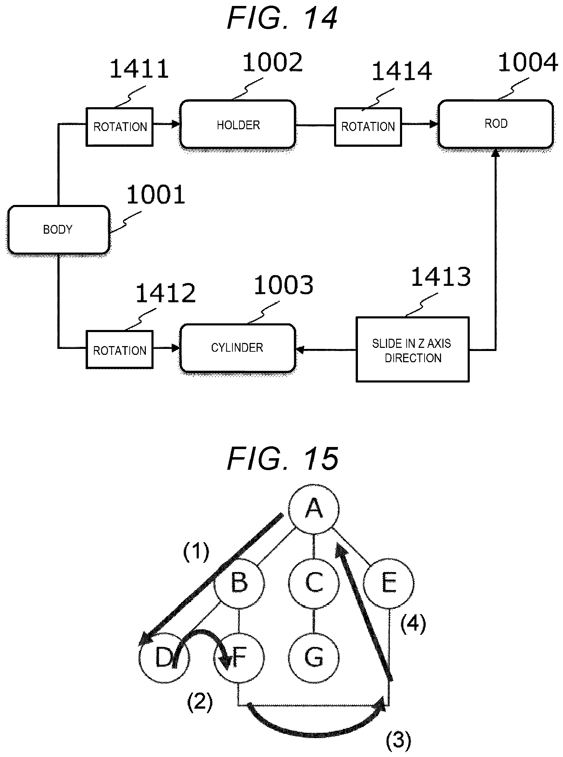

FIG. 14 is a tree diagram generated by the operation mechanism analysis unit 1806.

In FIG. 14, the body 1001 is extracted as the uppermost part of the tree. Therefore, it is desirable to receive designation of the uppermost part element from the user via the input and output unit 1807. Alternatively, the operation mechanism analysis unit 1806 extracts the uppermost part element according to a predetermined rule.

Next, the operation mechanism analysis unit 1806 extracts part elements to be connected to the body 1001 from the table of the number of the contact surfaces shown in FIG. 12. As a result, the holder 1002 and the cylinder 1003 are extracted. Here, as shown in FIG. 14, the connection relation between the holder 1002 and the body 1001 is rotation 1411. In addition, the connection relation between the cylinder 1003 and the body 1001 is rotation 1412.

Next, the operation mechanism analysis unit 1806 identifies a second layer of the connection relation. Therefore, the operation mechanism analysis unit 1806 extracts the extracted part elements and part elements connected to parts other than the uppermost part from the connection relation table in FIG. 13. That is, the operation mechanism analysis unit 1806 extracts the rod 1004 as a part element having a connection relation with the holder 1002. Here, the operation mechanism analysis unit 1806 identifies that the connection relation between the holder 1002 and the rod 1004 is rotation 1414.

The operation mechanism analysis unit 1806 identifies a second layer of another connection relation. First, the operation mechanism analysis unit 1806 extracts the rod 1004 as a part element having a connection relation with the cylinder 1003. Here, the operation mechanism analysis unit 1806 identifies that the connection relation between the cylinder 1003 and the rod 1004 is slide in the Z axis direction 1413.

Then, the operation mechanism analysis unit 1806 checks that no connection ahead of the rod 1404 is present. As a result, the operation mechanism analysis unit 1806 creates the tree diagram shown in FIG. 14.

Here, processing of extracting a closed loop from the tree diagram in FIG. 14 using a depth-first search method will be described. First, FIG. 15 shows a concept of the depth-first search method. A part passing through from the uppermost "part (node)" is set as "searched", and a part in a deeper (far from a start position) direction is preferentially searched. When the "searched" part is reached through a new path, it can be determined that "a closed circuit is present". In FIG. 15, searching is executed in an order of (1) ABD-(2) DF-(3) FE-(4) EA, and as a result, it is extracted that a closed circuit of A-B-F-E is present. Further, an operation mechanism can be determined by counting the relation (slide/rotation/fixation) between the parts. The parts here correspond to the part elements according to the present embodiment.

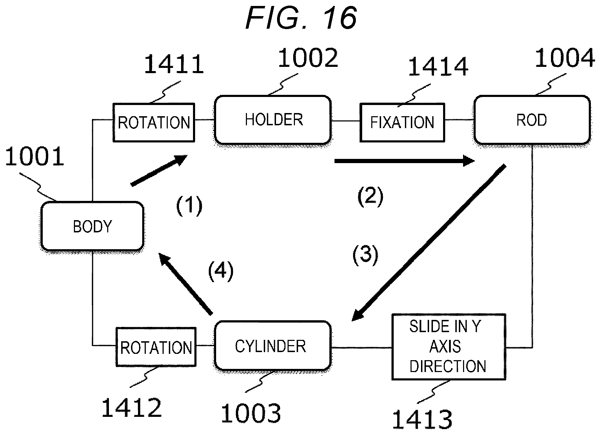

A case in which the depth-first search method is applied to the tree diagram in FIG. 14 will be described with reference to FIG. 16. The operation mechanism analysis unit 1806 starts searching from the uppermost body 1001. Then, the operation mechanism analysis unit 1806 executes searching in an order of (1)-(2)-(3)-(4). As a result, the operation mechanism analysis unit 1806 extracts a loop including the body 1001-the rotation 1411-the holder 1002-the rotation 1414-the rod 1004-the slide in the Z axis direction 1413-the cylinder 1003-the rotation 1412-the body 1001. Then, the operation mechanism analysis unit 1806 analyzes the loop, and identifies that the loop is a link including three rotations and one slide.

As a result, the operation mechanism analysis unit 1806 determines that a slide crank mechanism is present in the component 2. This determination can be executed by the operation mechanism analysis unit 1806 based on information defining an operation mechanism stored in advance. Further, according to this result, the operation mechanism analysis unit 1806 can automatically generate a simulation model.

Thus, in the present embodiment, when a closed loop shown in a tree diagram is extracted, an operation mechanism corresponding to a plurality of connection relations included in the closed loop can be identified. The above concludes the description of the second example.

### User Interface

Next, a processing flow related to a user interface according to the present embodiment will be described with reference to FIG. 17.

First, in step S1701, the input and output unit 1807 receives a processing start instruction from the user. Next, in step S1702, the input and output unit 1807 receives selection of the uppermost part element from the user. Here, it is desirable that the input and output unit 1807 outputs the part elements constituting the component. In response to this output, the user can select a part element. As a result, the operation mechanism analysis unit 1806 can identify the uppermost part element. This selection is described in the first example or the second example. Thus, by receiving the selection from the user, the trial and error for identifying the uppermost part element is reduced. Therefore, the arithmetic processing time is reduced, and the generation time can be effectively reduced. In addition, since the uppermost portion of the tree diagram is the reference position of the simulation model, the information is obvious to the user, and since the time and effort to designate a part element is small, the load on the user is also small. The operation mechanism analysis unit 1806 may extract the uppermost part element according to a predetermined rule.

In step S1703, the input and output unit 1807 receives setting of an allowable error from the user. Specifically, an allowable error of information on a position and a shape such as a distance, an angle, and a diameter of a part element is identified. The allowable error can be identified according to accuracy of the 3D CAD information. As a result, the connection relation identification unit 1805 identifies the allowable error and stores a value thereof. Therefore, it is desirable that the input and output unit 1807 output an input area for each position and shape such as a distance, an angle, and a diameter, and receive an input to each input area.

In step S1704, the input and output unit 1807 receives setting of a slide condition from the user. This setting of a slide condition is used for the determination of the stroke length executed in step S107 in FIG. 1. That is, it is possible to accurately determine the fixation or the slide based on a slide length indicated by the set slide condition.

Also in steps S1703 and S1704, the connection relation identification unit 1805 may identify an error or a stroke length according to a predetermined rule. A case is also included in which an error or a stroke length is recorded in advance and the error or the stroke length is used.

In step S1705, the input and output unit 1807 receives setting of a rotation determination constraint condition from the user. Then, the connection relation identification unit 1805 stores the setting of a rotation determination constraint condition. The rotation determination constraint condition is set such that a center sharing circle having a diameter smaller than a set value is not determined as rotation. The rotation determination constraint condition is for designating a fixing point such as a bolt such that the fixing point is not determined as a rotation axis. In the present embodiment, an attempt is made to efficiently separate a part which is a rotation axis with a diameter of the bolt as a reference, and a method of individually designating a bolt may be used.

In step S1706, the input and output unit 1807 receives a designation from the user for cutting the connection relation and setting the connection relation to non-contact. That is, an input for re-determining the connection relation that is determined to be fixation or the like, other than non-contact, based on the number of the contact surfaces to be non-contact is received. The input may be received from the user in advance as described in the above processing (1) to (3), or may be received in an interactive form at the time when a contradiction is found during mechanism analysis processing from the tree diagram.

The processing order in this flowchart is not limited to the order in FIG. 17. Alternatively, the steps may be individually processed and may not be continuously executed, and may be collectively executed before the processing in steps S101 to S112. Further, the processing in steps S101 to S112 may be executed in an interactive form as necessary during execution of the processing. As described above, according to the processing in FIG. 17, it is possible to provide a user interface capable of executing control leading to improvement on the accuracy of automatic generation processing and reduction in processing time by the user in an automatic generation device of the simulation model from the 3D CAD information.

As described above, the description of the present embodiment has been made. According to the present embodiment, a simulation model from a 3D CAD model can be automatically generated, and the execution efficiency of the simulation is greatly improved.

According to the present embodiment, the operation mechanism can be identified from the combination of the part elements. In addition, the simulation model can be generated based on the structure model data with which the connection relation can be identified in more detail. Therefore, the verification can be executed in detail.

## Claims

1. A simulation model generation device from a 3D CAD model, the simulation model generation device comprising:
a contact surface number determination unit configured to determine the number of contact surfaces between part elements constituting the 3D CAD model;
a shared rotation axis determination unit configured to determine, using the 3D CAD model, presence or absence of a shared rotation axis between the part elements; and
a connection relation identification unit configured to identify a connection relation between the part elements indicating any one of non-contact, fixation, slide, and rotation according to the number of the contact surfaces and the presence or absence of a shared rotation axis.

2. The simulation model generation device according to claim 1, further comprising:
an operation mechanism analysis unit configured to identify an operation mechanism in the 3D CAD model using the connection relation.

3. The simulation model generation device according to claim 2, wherein
the operation mechanism analysis unit is configured to identify, as the operation mechanism, a link mechanism corresponding to a closed loop when a plurality of the connection relations indicate the closed loop.

4. The simulation model generation device according to claim 3, wherein
the operation mechanism analysis unit identifies the closed loop using a depth-first search method.

5. The simulation model generation device according to any one of claims 1 to 4, further comprising:
an input unit configured to receive, from a user, an input related to the identification of the connection relation, wherein
the connection relation identification unit is configured to identify the connection relation based on the input.

6. A simulation model generation method from a 3D CAD model, the simulation model generation method comprising:
determining, by a contact surface number determination unit, the number of contact surfaces between part elements constituting the 3D CAD model;
determining, by a shared rotation axis determination unit, presence or absence of a shared rotation axis between the part elements using the 3D CAD model; and
identifying, by a connection relation identification unit, a connection relation between the part elements indicating any one of non-contact, fixation, slide, and rotation according to the number of the contact surfaces and the presence or absence of a shared rotation axis.

7. The simulation model generation method according to claim 6, further comprising:
identifying, by an operation mechanism analysis unit, an operation mechanism in the 3D CAD model using the connection relation.

8. The simulation model generation method according to claim 7, further comprising:
identifying, by the operation mechanism analysis unit, a link mechanism corresponding to a closed loop as the operation mechanism when a plurality of the connection relations indicate the closed loop.

9. The simulation model generation method according to claim 8, further comprising:
identifying, by the operation mechanism analysis unit, the closed loop using a depth-first search method.

10. The simulation model generation method according to any one of claims 6 to 9, further comprising:
receiving, by an input unit, an input related to the identification of the connection relation from a user; and
identifying, by the connection relation identification unit, the connection relation based on the input.

11. A program for causing a simulation model generation device from a 3D CAD model constituting a device which is a computer to function as:
a contact surface number determination unit configured to determine the number of contact surfaces between part elements constituting the 3D CAD model;
a shared rotation axis determination unit configured to determine, using the 3D CAD model, presence or absence of a shared rotation axis between the part elements; and
a connection relation identification unit configured to identify a connection relation between the part elements indicating any one of non-contact, fixation, slide, and rotation according to the number of the contact surfaces and the presence or absence of a shared rotation axis.

12. The program according to claim 11, wherein
the simulation model generation device is further caused to function as an operation mechanism analysis unit configured to identify an operation mechanism in the 3D CAD model using the connection relation.

13. The program according to claim 12, wherein
the operation mechanism analysis unit is configured to identify a link mechanism corresponding to a closed loop as the operation mechanism when a plurality of the connection relations indicate the closed loop.

14. The program according to claim 13, wherein
the operation mechanism analysis unit is configured to identify the closed loop using a depth-first search method.

15. The program according to any one of claims 11 to 14, wherein
the simulation model generation device is further caused to function as an input unit configured to receive an input related to the identification of the connection relation from a user, and
the connection relation identification unit is configured to identify the connection relation based on the input.
